Europäisches Patentamt

European Patent Office

Office européen des brevets

(11) Publication number: **0 270 329**
**A2**

# EUROPEAN PATENT APPLICATION

(21) Application number: 87310539.9

(51) Int. Cl.⁴: **B62D 27/06**

(22) Date of filing: 30.11.87

(30) Priority: 01.12.86 GB 8628653

(43) Date of publication of application:
08.06.88 Bulletin 88/23

(84) Designated Contracting States:
BE DE FR GB IT NL

(71) Applicant: **YORK TRAILER COMPANY LIMITED**
**Yafforth Road**
**Northallerton North Yorkshire, DL7 8UE(GB)**

(72) Inventor: **McCullagh, Frank**
**55 Bentinck Road**
**Stockton-on-Tees Cleveland(GB)**

(74) Representative: **Allen, Oliver John Richard et al**
**Norman House, 105-109 Strand**
**London, WC2R OAE(GB)**

(54) Improvements in and relating to sideless trailers.

(57) A trailer or semi-trailer in which the cant rail supporting the roof is so shaped and arranged as to be capable of functioning as a guide/support for the upper end of a movable support post which extends down from the cant rail across the open side of the trailer or semi-trailer. This avoids the necessity of support posts when these are not necessary, thus presenting unnecessary intrusion into the load space area.

EP 0 270 329 A2

## IMPROVEMENTS IN AND RELATING TO TRAILERS OR SEMI-TRAILERS

This invention relates to trailers or semi-trailers and in particular to a design of trailer which is devoid of side panels and where the roof is supported by posts at the corners of the trailer.

For trailers above a certain size it is desirable to provide additional roof support posts along the sides of the trailer whose position is adjustable depending on the load. Such trailers are provided with bracing members or cant rails along the edges of the roof, and in addition separate rails for guiding the additional roof support posts.

In accordance with the invention, a roof bracing member or cant rail for a trailer is so designed and arranged as to be capable of functioning as guide means for the upper end of a movable roof support post.

Such a cant rail, guides, when necessary, the sliding roof support post so that the necessity for additional rails is avoided thus providing minimum intrusion into the load space area.

Suitably, the cant rail comprises two rail members of inverted U-shaped cross-section, the base of one rail member being fixed across the mouth of the other rail member to provide an "open" cant rail. The latter rail member is provided with L-shaped guide members fixed to the mouth thereof such that they partially project across the mouth to provide a ledge along which the upper end of the support post is guided.

The cant rail may also be adapted to provide the trailer with a bracing member when no additional roof support posts are fitted.

When no roof support posts are required, one rail member is turned through 180° about its longitudinal axis and fitted inside the other rail member, to provide a "closed" cant rail which is fitted along the edge of the roof of the trailer.

The roof support post when used has sliding means (preferably two pairs of wheels) mounted on a horizontal shaft which together form a sliding engagement for the post with the cant rail. In particular, the vertical roof support post is attached perpendicularly to the horizontal shaft so that the post may slide along the cant rail. The post is suitably provided at a point along its length with means to lock it in the desired position along the trailer side.

The invention will now be described with reference to the accompanying drawings in which:-

Figure 1 is a longitudinal section through a trailer cant rail in accordance with the present invention, and

Figure 2 is a transverse section through the cant rail of Figure 1, as taken along the line X-X of Fig. 1.

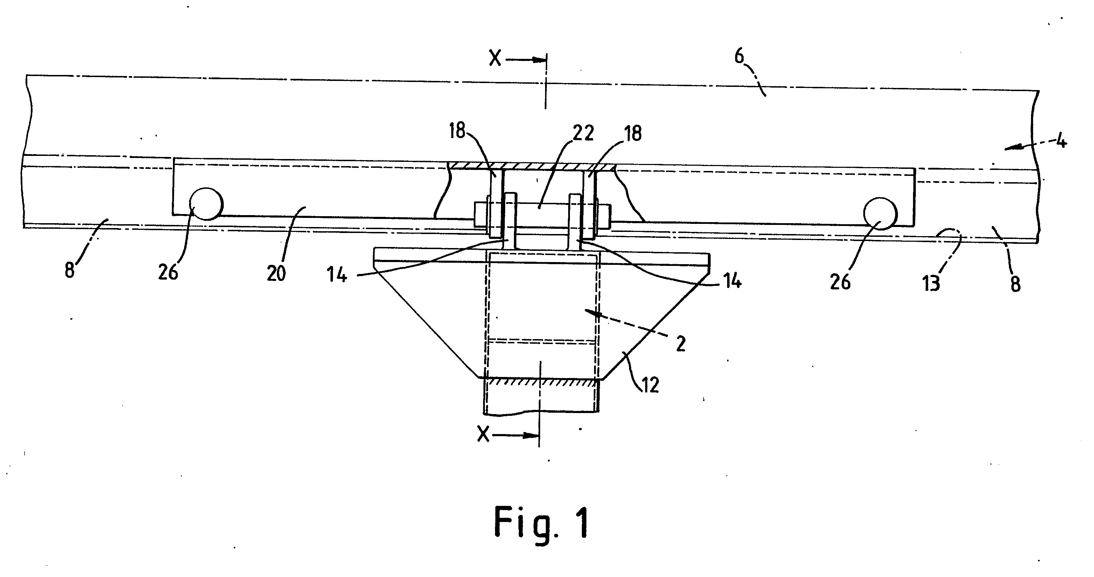

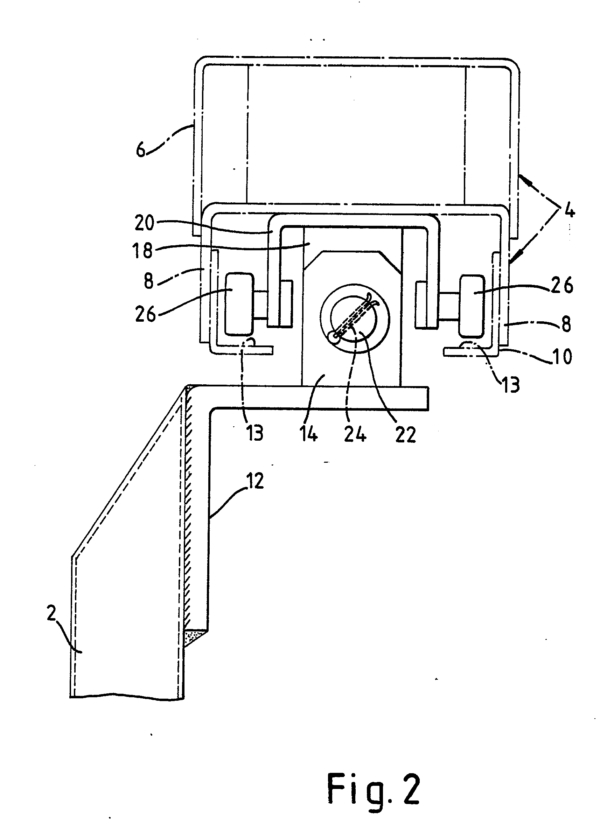

Referring now to Figures 1 and 2, a trailer (not shown) has a roof support post 2 and a cant rail generally indicated at 4 provided at the top edge of the trailer.

The cant rail 4 comprises a first rail member 6 having an inverted U-shaped cross-section and a second rail member 8, also of inverted U-shaped cross-section, the base of the second rail member 8 being attached across the mouth of the first rail member 6. The arms of the rail 8 have fixed thereto L-shaped members 10 which project across the mouth of the member 8, and provide a ledge 13.

The roof support post 2 has attached adjacent its top end, a trapezoidal bracket 12 having an L-shaped cross-section, the top flange of which having fixed thereto two vertical support members 14. The members 14 each have a circular hole 16 therethrough , and are so spaced as to fit precisely between two similar members 18 which are fixed to and project down from an inverted U-shaped beam 20. The members 18 are also provided with a circular hole therethrough so that when the holes in the respective members 18 are precisely aligned with the holes in the corresponding members 14, a pin 22 may be inserted through the holes in both pairs of members 14, 18 firmly to connect the post 2 to the beam 20. The pin 22 is fixed in position by means of split pin 24.

The beam 20 is provided at each end with a pair of wheels 26. Each pair of wheels 26 is mounted for rotation by conventional means, one on either side of the beam 20, and engages the lower flange of cant rail member 8.

In consequence, the member 20 and hence the post 2, may slide along the cant rail, and be retained in the desired position along the trailer side by a locking mechanism (not shown).

When sliding roof support posts 2 are not required in a trailer, the cant rail 4 may be adapted to function as a standard cant rail, by turning the rail member 8 through 180° about its longitudinal axis and fitting it inside the rail member 6. As a result, the rail members 6 and 8 of the cant rail may be manufactured to a standard shape and size, and then used on the trailer with or without sliding roof support posts as required.

## Claims

1. A trailer or semi-trailer wherein an upper side or cant rail supporting the roof is so shaped and arranged as to be capable of functioning as a guide/support for the upper end of a movable roof support post.

2. A trailer or semi-trailer as claimed in Claim 1 in which the cant rail has spaced a horizontally extending flange to receive a wheel mounted on the upper end of the moveable support post so that the post may slide along the rail.

3. A trailer or semi-trailer as claimed in Claim 2 in which the post is provided at a point along its length with means to lock it in its desired position along the trailer side.

4. A cant rail for use in a trailer or semi-trailer as claimed in Claim 1, comprising two rail members of U-shaped cross-section, the base of one rail member being fixed across the open mouth of the other and said one rail member being provided with inturned flanges partially projecting across its mouth to provide ledges by which the upper end of the support post may be guided/supported.

5. A cant rail comprising two rail members of U-shaped cross-section, one being dimensioned to fit within the other and being secured therein to form a closed box section rail, the smaller section member being provided with inwardly extending flanges partially extending across the mouth thereof, the two members of the cant rail being alternatively connected to form a cant rail as claimed in Claim 4.

6. A trailer or semi-trailer having a cant rail substantially as hereinbefore described with reference to the accompanying drawings.

7. A cant rail substantially as hereinbefore described with reference to the accompanying drawings.

Fig. 1

Fig. 2